# EUROPÄISCHE PATENTANMELDUNG

(11) **EP 3 460 286 A1**
(43) Veröffentlichungstag der Anmeldung: **27.03.2019**
(21) Anmeldenummer: 18194076.8
(22) Anmeldetag: 12.09.2018
(51) Int. Cl.: F16F 15/14, F16H 55/36

(54) **VORRICHTUNG ZUR ÜBERTRAGUNG EINER DREHBEWEGUNG**

(30) Priorität: 13.09.2017 DE 102017121244
(71) Anmelder: Vibracoustic GmbH, 64293 Darmstadt (DE)
(72) Erfinder: REYMANN, Francois, 68740 Munchhouse (FR); FASSBINDER, Peter, 79312 Emmendingen (DE); WOHLSCHLEGEL, Peter, 79400 Kandern (DE)
(74) Vertreter: Flügel Preissner Schober Seidel

(57) **Zusammenfassung**

Die vorliegende Erfindung betrifft eine Vorrichtung (10) zur Übertragung einer Drehbewegung von einer Kurbelwelle auf einen Riementrieb und umgekehrt, aufweisend eine Nabe (14), die mit der Kurbelwelle verbindbar ist, eine Riemenscheibe (12) und eine Federvorrichtung (16) zur Reduzierung von Torsionsschwingungen und /oder Drehmomentschwankungen, wobei die Federvorrichtung (16) wenigstens zwei Federelemente (28) aufweist, die die Riemenscheibe (12) und die Nabe (14) drehelastisch miteinander verbinden, wobei die Federelemente (28) als Blattfedern (30) ausgebildet sind, wobei jede der Blattfedern (30) zwei Endabschnitte (32) und einen die Endabschnitte (32) miteinander verbindenden Mittelabschnitt (34) aufweist, wobei jeder der Mittelabschnitte (34) eine Krümmung (36) aufweist, wobei die Endabschnitte (32) wenigstens einer Blattfeder (30) derart an der Riemenscheibe (12) festgelegt sind, dass die Krümmungen (36) radial nach innen weisen und an der Nabe (14) anliegen, und/oder wobei die Endabschnitte (32) wenigstens einer Blattfeder (30) derart an der Nabe (14) festgelegt sind, dass die Krümmungen (36) radial nach außen weisen und an der Riemenscheibe (12) anliegen.

## Beschreibung

Die vorliegende Erfindung betrifft eine Vorrichtung zur Übertragung einer Drehbewegung von einer Kurbelwelle auf einen Riementrieb und umgekehrt, umfassend eine Nabe, die mit der Kurbelwelle verbindbar ist, eine Riemenscheibe und eine Federvorrichtung zur Reduzierung von Torsionsschwingungen und/oder Drehmomentschwankungen.

Eine Vorrichtung der eingangs genannten Art wird in einem Kraftfahrzeug dazu verwendet, um eine Drehbewegung oder ein Drehmoment einer Kurbelwelle eines Verbrennungsmotors über einen Riementrieb auf Nebenaggregate, wie beispielsweise einen Klimakompressor oder eine Lichtmaschine, zu übertragen und dadurch anzutreiben. Ferner kann die Vorrichtung auch dazu genutzt werden, um eine Drehbewegung oder ein Drehmoment eines Nebenaggregats, wie beispielsweise eines Elektromotors, auf die Kurbelwelle zu übertragen und den Verbrennungsmotor zu starten.

Im Betrieb des Verbrennungsmotors können Drehzahlschwankungen auftreten, die auf die Kurbelwelle und den Riementrieb übertragen werden. Derartige Drehzahlschwankungen können zu Schwingungen im Riementrieb führen, die die Momentenübertragung und dadurch das Betriebsverhalten der Nebenaggregate beeinträchtigen.

Aus EP 1 619 410 B1 ist eine Vorrichtung bekannt, die eine Riemenscheibe, eine mit der Kurbelwelle verbindbare Nabe und eine Kupplungseinrichtung aufweist, die die Riemenscheibe und die Nabe schwingungsentkoppelt miteinander wirkverbindet. Die Kupplungseinrichtung weist einen Federkörper und ein Freilaufelement auf, welche in Reihe geschalten sind. Eine derartige Vorrichtung wird auch als entkoppelte Riemenscheibe bezeichnet, wobei der Federkörper die über die Kurbelwelle in den Riementrieb eingetragenen Schwingungen entkoppelt bzw. isoliert. Des Weiteren ist aus DE 10 2008 017 626 A1 eine Drehfeder bekannt, die eine Antriebsscheibe und eine Abtriebsscheibe aufweist, welche gegen die Rückstellkraft einer schraubenförmigen Feder relativ zueinander um eine Drehachse verdrehbar sind. Eine derartige Drehfeder wird in einer Vorrichtung der eingangs genannten Art anstelle eines elastomeren Federkörpers dazu verwendet, um die von der Kurbelwelle in den Riementrieb eingetragenen Schwingungen zu isolieren.

Der Erfindung liegt die Aufgabe zugrunde, eine Vorrichtung zur Übertragung einer Drehbewegung von einer Kurbelwelle auf einen Riementrieb und umgekehrt zu schaffen, die ein verbessertes Isolierungsverhalten, eine längere Lebensdauer sowie eine vereinfachte Montage aufweist.

Zur Lösung der Aufgabe wird eine Vorrichtung mit den Merkmalen des Anspruchs 1 vorgeschlagen.

Vorteilhafte Ausgestaltungen der Vorrichtung sind Gegenstand der abhängigen Ansprüche.

Eine Vorrichtung zur Übertragung einer Drehbewegung von einer Kurbelwelle auf einen Riementrieb und umgekehrt weist eine Nabe, die mit der Kurbelwelle verbindbar ist, eine Riemenscheibe, die mit dem Riementrieb koppelbar ist, und eine Federvorrichtung zur Reduzierung von Torsionsschwingungen und/oder Drehmomentschwankungen auf, wobei die Federvorrichtung wenigstens zwei Federelemente aufweist, die die Riemenscheibe und die Nabe drehelastisch miteinander verbinden, wobei die Federelemente als Blattfedern ausgebildet sind, wobei jede der Blattfedern zwei Endabschnitte und einen die Endabschnitte miteinander verbindenden Mittelabschnitt aufweist, wobei jeder der Mittelabschnitte eine Krümmung aufweist, wobei die Endabschnitte wenigstens einer Blattfeder derart an der Riemenscheibe festgelegt sind, dass die Krümmungen radial nach innen weisen und an der Nabe anliegen, und/oder wobei die Endabschnitte wenigstens einer Blattfeder derart an der Nabe festgelegt sind, dass die Krümmungen radial nach außen weisen und an der Riemenscheibe anliegen.

Bei der erfindungsgemäßen Vorrichtung erfolgt eine Übertragung einer Drehbewegung oder eines ein- und ausgehenden Drehmoments von der Kurbelwelle auf den Riementrieb und umgekehrt über die als Blattfedern ausgebildeten Federelemente. Blattfedern sind im Vergleich zu einem elastomeren Federkörper oder einer Drehfeder einfach und kostengünstig herstellbar und weisen eine längere Lebensdauer auf. Die Entkopplungs- beziehungsweise die Isolationswirkung kann auf einfache Weise über die Anzahl der Blattfedern und/oder deren Geometrie eingestellt werden. So kann durch Variation der Dicke und/oder der Materialeigenschaften der Blattfedern die Steifigkeit der Vorrichtung eingestellt werden. Dadurch lässt sich die Entkopplungswirkung gezielt auf den jeweiligen Anwendungsfall einstellen.

Die Kopplung zwischen den Blattfedern und den Anbauteilen, also der Riemenscheibe und/oder der Nabe, kann zudem durch einfache Geometrielösungen der Anbauteile gelöst werden und erfordern keine zusätzlichen Verbindungen. Dadurch ist eine einfache Montage der Federelemente an den Anbauteilen gewährleistet.

In einer vorteilhaften Ausgestaltung ist der Mittelabschnitt gekrümmt und die Endabschnitte stehen von der Riemenscheibe radial nach innen, insbesondere in Richtung der Nabe vor, so dass der Mittelabschnitt an der Nabe anliegt. In einer vorteilhaften Ausgestaltung ist der Mittelabschnitt gekrümmt und die Endabschnitte stehen von der Nabe radial nach außen, insbesondere in Richtung der Riemenscheibe vor, so dass der Mittelabschnitt an der Riemenscheibe anliegt. Vorteilhaft sind die Blattfedern kontinuierlich gekrümmt, insbesondere sind die Blattfedern konstant gekrümmt.

In einer vorteilhaften Ausgestaltung weist die Krümmung einen Krümmungsradius auf, der von einem Krümmungsmittelpunkt gesehen radial nach innen oder radial nach außen weisen kann. Wenn der Krümmungsradius von dem Krümmungsmittelpunkt radial nach innen weist, dann liegt die Krümmung der Blattfeder an der Nabe an. Wenn der Krümmungsradius von dem Krümmungsmittelpunkt radial nach außen weist, dann liegt die Krümmung der Blattfeder an der Riemenscheibe an.

Die Endabschnitte werden vorteilhaft derart mit der Riemenscheibe und/oder der Nabe verbunden, dass die Krümmung der Mittelabschnitte formschlüssig und/oder kraftschlüssig an der Nabe und/oder der Riemenscheibe anliegt, so dass eine Drehbewegung oder ein Drehmoment übertragen werden kann. Über den Krümmungsradius der Krümmung kann die Anpresskraft des Mittelabschnitts auf die Nabe und/oder die Riemenscheibe und das damit zu übertragende Drehmoment eingestellt werden.

Vorteilhaft sind die Blattfedern derart zwischen der Riemenscheibe und der Nabe angeordnet, dass sie vorgespannt sind und eine Kraft auf die Nabe und/oder die Riemenscheibe ausüben und so die beiden Elemente zueinander zentrieren beziehungsweise in Position halten.

Weiterhin vorteilhaft sind die Blattfedern als Blechelemente, insbesondere Stahlbleche, ausgebildet, die weich oder gehärtet sein können. So können zur Einstellung der Steifigkeit weiche und gehärtete Stahlbleche als Blattfedern miteinander kombiniert werden.

Eine Außenumfangsfläche der Nabe und/oder eine Innenumfangsfläche der Riemenscheibe kann ringförmig oder polygonförmig sein. Die Riemenscheibe kann an einer Außenumfangsfläche mit einem Poly-V-Profil zur Aufnahme eines Riemens des Riementriebs versehen sein.

In einer vorteilhaften Ausgestaltung sind die Federelemente formschlüssig, kraftschlüssig und/oder stoffschlüssig mit der Riemenscheibe und/oder der Nabe verbunden. Dadurch ist die Montage der Blattfedern an den Anbauteilen vereinfacht, da die Kopplung zwischen den Blattfedern und den Anbauteilen keine spezielle Geometrielösung oder zusätzliche Verbindungen benötigt. So können die Endabschnitte mit der Riemenscheibe oder der Nabe verschweißt, vernietet und/oder verklebt sein. Ferner können in die Riemenscheibe oder in die Nabe Aufnahmeöffnungen zur Aufnahme der Endabschnitte eingebracht sein.

In einer vorteilhaften Ausgestaltung weist die Nabe und/oder die Riemenscheibe Vertiefungen auf, in die die Krümmungen formschlüssig einliegen. Die Vertiefungen verhindern ein Durchrutschen der Blattfedern während der Übertragung einer Drehbewegung oder eines Drehmomentes. Insbesondere sind die Vertiefungen zu den Krümmungen korrespondierend ausgebildet. Weiterhin vorteilhaft entspricht ein Radius der Vertiefung dem Krümmungsradius derjenigen Krümmung, die dieser Vertiefung zugeordnet ist. So können beispielsweise in einer Außenumfangsfläche der Nabe und/oder in einer Innenumfangsfläche der Riemenscheibe die Vertiefungen eingebracht sein.

In einer vorteilhaften Ausgestaltung ist eine Außenumfangsfläche der Nabe und/oder eine Innenumfangsfläche der Riemenscheibe mit einer haftreibungserhöhenden Beschichtung versehen. Die Beschichtung erhöht die Reibung zwischen den Blattfedern, insbesondere den Krümmungen, und dem dazugehörigen Anbauteil. Über den Haftreibungskoeffizienten kann das zu übertragende Drehmoment eingestellt werden. Die Beschichtung kann eine Gummierung sein.

In einer vorteilhaften Ausgestaltung weisen die Riemenscheibe und/oder die Nabe Schlitze auf, in die die Endabschnitte eingesetzt sind. Schlitze sind als Anschlussgeometrien einfach und kostengünstig herstellbar. Zudem erleichtern die Schlitze die Montage der Blattfedern, da die Endabschnitte einfach in die Schlitze eingesteckt werden können. Vorteilhaft sind die Schlitze derart in die Riemenscheibe eingebracht, dass sich die Schlitze von einer Innenumfangsfläche der Riemenscheibe radial nach außen erstrecken. Weiterhin vorteilhaft sind die Schlitze derart in die Nabe eingebracht, dass sich die Schlitze von einer Außenumfangsfläche der Nabe radial nach innen erstrecken. Zur Befestigung der Endabschnitte sind pro Blattfeder zwei Schlitze erforderlich. Über den Abstand der Schlitze kann der Krümmungsradius der Krümmungen und damit die Anpresskraft der Blattfeder auf die Riemenscheibe und/oder die Nabe eingestellt werden.

In einer vorteilhaften Ausgestaltung sind die Endabschnitte umgebogen, wobei die umgebogenen Endabschnitte an der Innenumfangsfläche der Riemenscheibe und/oder einer Außenumfangsfläche der Nabe anliegen. Dadurch weisen die Blattfedern eine niedrige Bauhöhe auf. Die die umgebogenen Endabschnitte aufweisenden Blattfedern sind formschlüssig und kraftschlüssig zwischen der Nabe und der Riemenscheibe aufgenommen. Zum Einsetzten der Blattfedern werden die Blattfedern, insbesondere die Endabschnitte zusammengedrückt und in einen zwischen der Nabe und der Riemenscheibe gebildeten Hohlraum eingesetzt. Eine Blattfeder, deren Endabschnitte umgebogen sind, kann auch als Formfeder bezeichnet werden. Bevorzugt sind die Endabschnitte derart umgebogen, dass sie zu dem Mittelabschnitt einen Winkel von zwischen ca. 90° und 180° einnehmen.

In einer vorteilhaften Ausgestaltung weist die Federvorrichtung wenigstens ein Dämpfungselement auf, wobei das Dämpfungselement zwischen einem Federelement und der Riemenscheibe oder der Nabe angeordnet ist. Über das Dämpfungselement kann die Steifigkeit der Federvorrichtung beeinflusst werden. Vorteilhaft ist das Dämpfungselement in einem zwischen dem Federelement und der Riemenscheibe oder der Nabe gebildeten Hohlraum angeordnet. Vorteilhaft füllt das Dämpfungselement den Hohlraum fast vollständig aus. Das Dämpfungselement kann aus einem Elastomer hergestellt sein. Zur Einstellung der Steifigkeit kann das Dämpfungselement mit wenigstens einer Ausnehmung versehen sein. Durch Variation unterschiedlicher Blattfedern und Dämpfungselementen können eine Vielzahl an Entkopplungs- beziehungsweise Isolationswirkungen eingestellt werden.

In einer vorteilhaften Ausgestaltung ist das Dämpfungselement formschlüssig, kraftschlüssig und/oder stoffschlüssig mit der Riemenscheibe und/oder der Nabe verbunden. So kann das Dämpfungselement in den zwischen dem Federelement und der Riemenscheibe oder der Nabe gebildeten Hohlraum eingepresst sein. Darüber hinaus kann das Dämpfungselement in ein ringförmiges Gehäuse der Riemenscheibe oder der Nabe eingesetzt und mit selbigen verbunden sein. Ferner kann ein als Verschlusselement ausgebildetes zusätzliches Element mit der Riemenscheibe oder der Nabe verbunden sein, das ein ringförmiges Gehäuse aufweist, in das das Dämpfungselement eingesetzt ist.

In einer vorteilhaften Ausgestaltung ist das Dämpfungselement über wenigstens ein Stiftelement mit der Riemenscheibe und/oder der Nabe verbunden. Mittels des Stiftelementes kann das Dämpfungselement einfach und kostengünstig an der Riemenscheibe und/oder der Nabe befestigt werden. Hierzu weist das Dämpfungselement wenigstens einen als Bohrung ausgebildeten Durchgang auf, wobei das Dämpfungselement mittels des Durchgangs auf das Stiftelement aufgesteckt wird. Vorteilhaft ist das Dämpfungselement auf das Stiftelement aufgeklipst. Hierzu kann das Stiftelement an einem freien Ende einen Vorsprung aufweisen, dessen Durchmesser größer als der Durchmesser des Durchgangs ist. Im aufgeklipsten Zustand kann der Vorsprung in einem am Dämpfungselement ausgebildeten Rücksprung einliegen, um eine plane Fläche zu erzeugen. Das Stiftelement kann formschlüssig, kraftschlüssig und/oder stoffschlüssig mit der Riemenscheibe, der Nabe und/oder einem Verschlusselement verbunden sein. Vorteilhaft ist jedes Dämpfungselement mittels zweier Stiftelemente mit der Riemenscheibe, der Nabe und/oder einem Verschlusselement verbunden.

In einer vorteilhaften Ausgestaltung ist ein Torsionsschwingungsdämpfer vorgesehen, der mit der Nabe verbunden ist. Der Torsionsschwingungsdämpfer dämpft beziehungsweise tilgt die an der Kurbelwelle auftretenden Schwingungen. Hierzu kann der Torsionsschwingungsdämpfer einen Schwungring und einen Federkörper aufweisen. In einer vorteilhaften Ausgestaltung stützt sich die Riemenscheibe auf einem Fortsatz des Torsionsschwingungsdämpfers ab. In einer vorteilhaften Ausgestaltung ist zwischen der Riemenscheibe und dem Fortsatz ein Lagerelement, insbesondere ein Gleitlager angeordnet.

In einer vorteilhaften Ausgestaltung ist eine Schmiereinrichtung vorgesehen. Die Schmiereinrichtung kann aus radial nach außen gerichteten Kanälen, die in die Nabe eingebracht sind und/oder aus radial nach innen gerichteten Kanälen gebildet sein, die in die Riemenscheibe eingebracht sind.

In einer vorteilhaften Ausgestaltung ist wenigstens ein Verschlusselement zum Abdecken der Federvorrichtung vorgesehen. Das Verschlusselement schützt die Blattfedern und die Dämpfungselemente vor einer Verschmutzung und gewährleistet dadurch einen einwandfreien Betrieb der Vorrichtung. Das Verschlusselement ist vorteilhaft als kreisförmiger Ring ausgebildet. Das Verschlusselement kann formschlüssig und/oder kraftschlüssig mit der Riemenscheibe und/oder der Nabe verbunden sein. Das Verschlusselement kann einen ringförmigen Absatz aufweisen, mittels dem das Verschlusselement auf die Riemenscheibe und/oder die Nabe aufgepresst ist. Vorteilhaft sind wenigstens zwei Verschlusselemente vorgesehen, wobei eines der Verschlusselemente mit der Nabe und das andere Verschlusselement mit der Riemenscheibe verbunden ist. Zur Abdichtung kann zwischen dem Verschlusselement und der Riemenscheibe und/oder der Nabe wenigstens ein Dichtelement angeordnet sein. Das Dichtelement kann als Radialwellendichtring oder als O-Ring aus einem elastomeren Werkstoff ausgebildet sein.

Nachfolgend werden eine Vorrichtung sowie weitere Merkmale und Vorteile anhand von Ausführungsbeispielen näher erläutert, die in den Figuren schematisch dargestellt sind. Hierbei zeigt:
- Figur 1: einen Horizontalschnitt durch eine Vorrichtung gemäß einer ersten Ausführungsform;
- Figur 2: einen Schnitt entlang der Linie II-II in Figur 1;
- Figur 3: eine vergrößerte Darstellung des Ausschnitts III aus Figur 2;
- Figur 4: einen Horizontalschnitt durch eine Vorrichtung gemäß einer zweiten Ausführungsform;
- Figur 5: einen Schnitt entlang der Linie V-V in Figur 4; und
- Figur 6: eine vergrößerte Darstellung eines Schnitts entlang der Linie VI-VI in Figur 4.

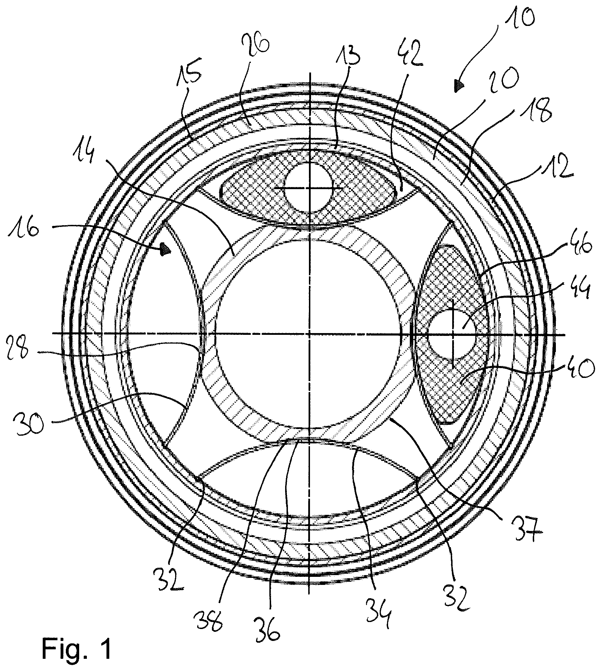

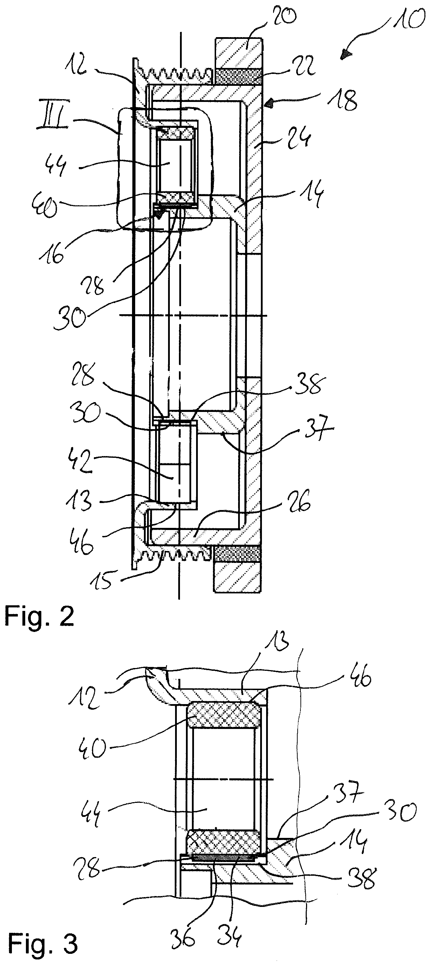

In den Figuren 1 und 2 ist eine Vorrichtung 10 zur Übertragung einer Drehbewegung von einer nicht dargestellten Kurbelwelle auf einen nicht dargestellten Riementrieb und umgekehrt dargestellt.

Die Vorrichtung 10 weist eine Nabe 12, die mit dem Antriebsende eines Verbrennungsmotors, wie beispielsweise einer Kurbelwelle verbindbar ist, eine Riemenscheibe 14, die mit dem Riementrieb gekoppelt ist, und eine Federvorrichtung 16 zur Reduzierung von Torsionsschwingungen und/oder Drehmomentschwankungen auf.

Wie in Figur 1 ersichtlich ist, sind die Riemenscheibe 12 und die Nabe 14 konzentrisch zueinander angeordnet, wobei die Riemenscheibe 12 die Nabe 14 radial umfangsseitig unter Ausbildung eines Abstandes umgibt.

Die Riemenscheibe 12 ist U-förmig ausgebildet und weist einen ersten Schenkel 13 und einen zweiten Schenkel 15 mit einem Poly-V-Profil zur Aufnahme eines nicht dargestellten Riemens des Riementriebs auf.

Wie insbesondere in Figur 2 ersichtlich ist, weist die Vorrichtung 10 zudem einen Torsionsschwingungsdämpfer 18 auf, der radial benachbart zu der Riemenscheibe 12 angeordnet ist. Der Torsionsschwingungsdämpfer 18 dämpft die Schwingungen der Kurbelwelle.

Der Torsionsschwingungsdämpfer 18 weist einen Schwungring 20, einen elastomeren Federkörper 22 und ein Flanschelement 24 auf. Der Schwungring 20 ist radial außenseitig angeordnet und über den Federkörper 22 mit dem Flanschelement 24 verbunden. Insbesondere ist der Federkörper 22 an den Schwungring 20 und an das Flanschelement 24 anvulkanisiert. Über das Flanschelement 24 erfolgt eine Anbindung an die Nabe 14 und/oder die Kurbelwelle.

Wie zudem in Figur 2 ersichtlich ist, weist das Flanschelement 24 einen Fortsatz 26 auf, auf dem sich die Riemenscheibe 12, insbesondere der zweite Schenkel 15 abstützt. Zur Verbesserung der Gleiteigenschaften kann zwischen der Riemenscheibe 12 und dem Fortsatz 26 ein Lagerelement, insbesondere ein Gleitlager, vorgesehen sein.

Die Federvorrichtung 16 ist zwischen dem ersten Schenkel 13 und der Nabe 14 angeordnet und überträgt eine Drehbewegung oder ein ein- und ausgehendes Drehmoment von der Kurbelwelle auf den Riementrieb und umgekehrt.

Die Federvorrichtung 16 weist vier Federelemente 28 auf, die die Riemenscheibe 12 und die Nabe 14 drehelastisch miteinander verbinden. Die Federelemente 28 sind als Blattfedern 30 ausgebildet. Jede der Blattfedern 30 weist zwei Endabschnitte 32 und einen die beiden Endabschnitte 32 miteinander verbindenden Mittelabschnitt 34 auf, wobei jeder der Mittelabschnitte 34 eine Krümmung 36 aufweist. Die Blattfedern 30 sind als Stahlbleche ausgebildet und können aus einem weichen oder gehärteten Stahlblech hergestellt sein.

Wie in Figur 1 ersichtlich ist, sind die Endabschnitte 32 derart mit der Riemenscheibe 12 verbunden, dass die Krümmungen 36 radial nach innen weisen und an der Nabe 12 anliegen. Zur Befestigung der Endabschnitte 32 an der Riemenscheibe 12 sind in die Riemenscheibe 12 nicht dargestellte Schlitze eingebracht, in welche die Endabschnitte 32 eingesetzt sind. Über den Abstand der Schlitze kann ein Krümmungsradius der Krümmungen 36 und damit verbunden die Anpresskraft der Blattfeder 30 auf die Nabe 14 eingestellt werden.

Wie zudem in Figur 1 ersichtlich ist, weist die Nabe 14 an einer Außenumfangsfläche 37 Vertiefungen 38 auf, in die die Krümmungen 36 einliegen. Insbesondere entspricht ein Radius der Vertiefung 38 einem Krümmungsradius der Krümmung 36. Zur Erhöhung der Haftreibung zwischen den Blattfedern 30 und der Nabe 14 kann die Außenumfangsfläche 37 der Nabe 14 mit einer haftreibungserhöhenden Beschichtung, wie beispielsweise einer Gummierung, versehen sein.

Während der Übertragung einer Drehbewegung beziehungsweise eines Drehmomentes isolieren beziehungsweise entkoppeln die Blattfedern 30 die von der Kurbelwelle in den Riementrieb eingetragenen Schwingungen. Die Entkopplungsbeziehungsweise die Isolationswirkung kann auf einfache Weise über die Anzahl der Blattfedern 30 und/oder deren Geometrie eingestellt werden. So kann durch Variation der Dicke und/oder der Materialeigenschaften der Blattfedern 30 die Steifigkeit der Vorrichtung 10 eingestellt werden. Dadurch lässt sich die Entkopplungswirkung gezielt auf den jeweiligen Anwendungsfall einstellen.

Die Federvorrichtung 16 weist zudem Dämpfungselemente 40 auf, wobei jeweils ein Dämpfungselement 40 zwischen einer Blattfeder 30 und der Riemenscheibe 12 angeordnet ist. Insbesondere ist das Dämpfungselement 40 innerhalb eines zwischen der Blattfeder 30 und der Riemenscheibe 12 ausgebildeten Hohlraums 42 angeordnet. Vorliegend sind zwei Dämpfungselemente 40 vorgesehen. Es ist jedoch auch denkbar, dass nur ein Dämpfungselement 40, drei oder vier Dämpfungselemente 40 vorgesehen sind.

Die Dämpfungselemente 40 sind aus einem elastomeren Werkstoff und weisen eine zentrale Öffnung 44 auf. Wie insbesondere in Figur 3 ersichtlich ist, liegen die Dämpfungselemente 40 formschlüssig und kraftschlüssig an einer Innenumfangsfläche 46 der Riemenscheibe 12, insbesondere an dem ersten Schenkel 13 und den Blattfedern 30 an. Insbesondere sind die Dämpfungselemente 40 in den Hohlraum 42 eingepresst.

Nachfolgend wird die Vorrichtung 10 anhand eines weiteren Ausführungsbeispiels erläutert, wobei für gleiche oder funktionsgleiche Teile die gleichen Bezugszeichen verwendet werden.

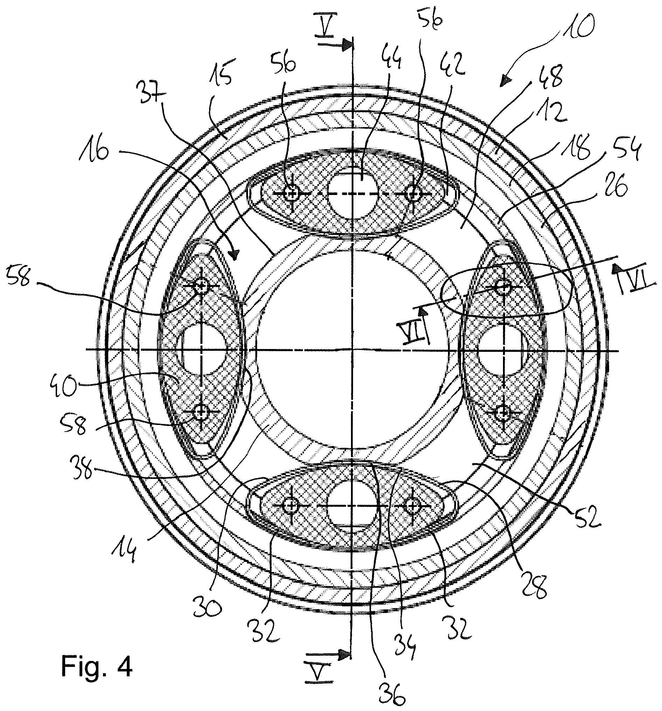

In den Figuren 4 bis 6 ist eine zweite Ausführungsform der Vorrichtung 10 gezeigt, die sich von der ersten Ausführungsform in der Ausgestaltung der Blattfedern 30, der Befestigung der Dämpfungselemente 40 sowie in der Verwendung zweier Verschlusselemente 48, 50 unterscheidet.

Wie insbesondere in Figur 4 ersichtlich ist, sind die Endabschnitte 32 der Blattfedern 30 umgebogen. Die umgebogenen Endabschnitte 32 liegen an der Innenumfangsfläche 46 der Riemenscheibe 12, insbesondere an dem ersten Schenkel 13 an. Die Endabschnitte 36 können derart umgebogen sein, dass sie zu dem Mittelabschnitt 34 einen Winkel von zwischen ca. 90° und 180° einnehmen.

Die Blattfedern 30 sind in einem ringförmigen Gehäuse 52 angeordnet, der von der Nabe 14, dem ersten Schenkel 15 und einem ersten Verschlusselement 48 gebildet ist. Das erste Verschlusselement 48 ist als Ringscheibe ausgebildet und weist einen umlaufenden, ringförmigen ersten Absatz 54 auf. Zwischen dem ersten Verschlusselement 48 und der Nabe 14 ist ein erstes Dichtelement 55 angeordnet, das als O-Ring ausgebildet ist.

Die Blattfedern 30 sind formschlüssig und kraftschlüssig innerhalb des ringfömigen Gehäuses 52 aufgenommen, wobei die Krümmungen 36 in Vertiefungen 38 der Nabe 14 einliegen und die umgebogenen Endabschnitte liegen an einer Innenumfangsfläche 46 der Riemenscheibe 12, insbesondere an dem ersten Schenkel 13 an. Zum Einsetzten der Blattfedern 30 in das ringförmige Gehäuse 52 werden die Blattfedern 30, insbesondere die Endabschnitte 32 zusammengedrückt und in das ringförmige Gehäuse 52 eingesetzt

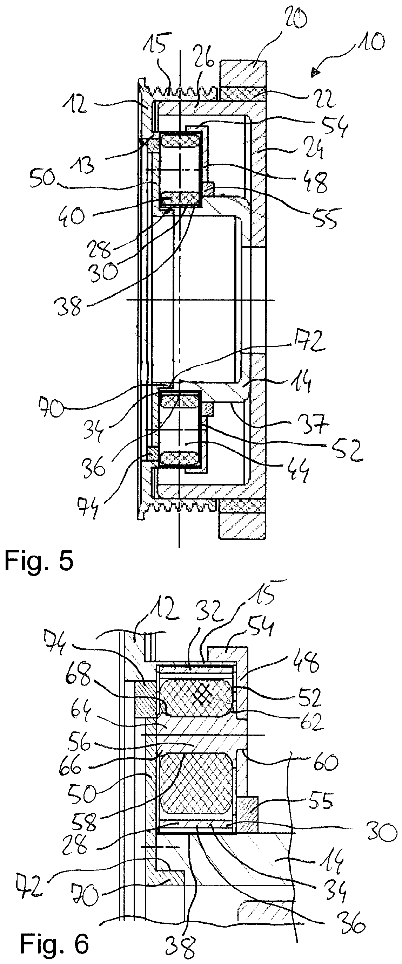

Wie zudem in den Figuren 4 und 6 ersichtlich ist, sind die Dämpfungselemente 40 mittels Stiftelementen 56 an dem ersten Verschlusselement 48 festgelegt. Hierzu weist jedes Dämpfungselement 40 zwei Durchgänge 58 auf, durch die jeweils ein Stiftelement 56 geführt beziehungsweise eingesteckt ist.

Die Stiftelemente 56 sind in Bohrungen 60 des ersten Verschlusselementes 48 eingesetzt, wobei ein am Stiftelement 56 ausgebildeter Kragenabschnitt 62 an dem ersten Verschlusselement 48 anliegt. An einem freien Ende 64 weist jedes der Stiftelemente 48 einen Vorsprung 66 auf, dessen Durchmesser größer als der Durchmesser des Durchgangs 58 ist.

Jedes der Dämpfungselemente 40 wird über seine beiden Durchgänge 58 auf zwei Stiftelemente 56 aufgesteckt beziehungsweise aufgeklipst, indem die Vorsprünge 66 formschlüssig in am Dämpfungselement 40 eingebrachte Rücksprünge 68 einliegen beziehungsweise eingreifen.

Wie zudem in den Figuren 5 und 6 ersichtlich ist, ist ein zweites Verschlusselement 50 vorgesehen, das auf die Nabe 14 aufgepresst ist. Das zweite Verschlusselement 50 ist als Ringscheibe ausgebildet und weist einen umlaufenden, ringförmigen zweiten Absatz 70 auf, der auf die Nabe 14 aufgepresst ist. Insbesondere greift der zweite Absatz 70 in eine Ausnehmung 72 der Nabe 14 ein. Zwischen dem zweiten Verschlusselement 50 und der Nabe 14 ist ein zweites Dichtelement 74 angeordnet, das als O-Ring ausgebildet ist.

Da die beiden Verschlusselemente 48, 50 und die beiden Dichtelemente 55, 74 das ringförmige Gehäuse 52 abdichten, kann eine nicht dargestellte Schmiereinrichtung vorgesehen sein. Die Schmiereinrichtung kann aus radial nach außen gerichteten Kanälen, die in die Nabe 14 eingebracht sind und/oder aus radial nach innen gerichteten Kanälen gebildet sein, die in die Riemenscheibe 12 eingebracht sind.

### Bezugszeichenliste

- 10: Vorrichtung
- 12: Riemenscheibe
- 13: erster Schenkel
- 14: Nabe
- 15: zweiter Schenkel
- 16: Federvorrichtung
- 18: Torsionsschwingungsdämpfer
- 20: Schwungring
- 22: Federkörper
- 24: Flanschelement
- 26: Fortsatz
- 28: Federelement
- 30: Blattfeder
- 32: Endabschnitt
- 34: Mittelabschnitt
- 36: Krümmung
- 37: Außenumfangsfläche
- 38: Vertiefung
- 40: Dämpfungselement
- 42: Hohlraum
- 44: Öffnung
- 46: Innenumfangsfläche
- 48: erstes Verschlusselement
- 50: zweites Verschlusselement
- 52: ringförmiges Gehäuse
- 54: erster Absatz
- 55: erstes Dichtelement
- 56: Stiftelement
- 58: Durchgang
- 60: Bohrung
- 62: Kragenabschnitt
- 64: freies Ende
- 66: Vorsprung
- 68: Rücksprung
- 70: zweiter Absatz
- 72: Ausnehmung
- 74: zweites Dichtelement

## Patentansprüche

1. Vorrichtung (10) zur Übertragung einer Drehbewegung von einer Kurbelwelle auf einen Riementrieb und umgekehrt, aufweisend eine Nabe (14), die mit der Kurbelwelle verbindbar ist, eine Riemenscheibe (12) und eine Federvorrichtung (16) zur Reduzierung von Torsionsschwingungen und /oder Drehmomentschwankungen, wobei die Federvorrichtung (16) wenigstens zwei Federelemente (28) aufweist, die die Riemenscheibe (12) und die Nabe (14) drehelastisch miteinander verbinden, wobei die Federelemente (28) als Blattfedern (30) ausgebildet sind, wobei jede der Blattfedern (30) zwei Endabschnitte (32) und einen die Endabschnitte (32) miteinander verbindenden Mittelabschnitt (34) aufweist, wobei jeder der Mittelabschnitte (34) eine Krümmung (36) aufweist, wobei die Endabschnitte (32) wenigstens einer Blattfeder (30) derart an der Riemenscheibe (12) festgelegt sind, dass die Krümmungen (36) radial nach innen weisen und an der Nabe (14) anliegen, und/oder wobei die Endabschnitte (32) wenigstens einer Blattfeder (30) derart an der Nabe (14) festgelegt sind, dass die Krümmungen (36) radial nach außen weisen und an der Riemenscheibe (12) anliegen.

2. Vorrichtung (10) nach Anspruch 1, **dadurch gekennzeichnet, dass** die Federelemente (28) formschlüssig, kraftschlüssig und/oder stoffschlüssig mit der Riemenscheibe (12) und/oder der Nabe (14) verbunden sind.

3. Vorrichtung (10) nach Anspruch 1 oder 2, **dadurch gekennzeichnet, dass** die Nabe (14) und/oder die Riemenscheibe (12) Vertiefungen (38) aufweist, in die die Krümmungen (36) formschlüssig einliegen.

4. Vorrichtung (10) nach einem der vorergehenden Ansprüche, **dadurch gekennzeichnet, dass** eine Außenumfangsfläche (37) der Nabe (14) und/oder eine Innenumfangsfläche (46) der Riemenscheibe (12) mit einer haftreibungserhöhenden Beschichtung versehen ist.

5. Vorrichtung (10) nach einem der vorhergehenden Ansprüche, **dadurch gekennzeichnet, dass** die Riemenscheibe (12) und/oder die Nabe (14) Schlitze aufweist, in die die Endabschnitte (32) eingesetzt sind.

6. Vorrichtung (10) nach einem der vorhergehenden Ansprüche, **dadurch gekennzeichnet, dass** die Endabschnitte (32) umgebogen sind, wobei die umgebogenen Endabschnitte (32) an einer Innenumfangsfläche (46) der Riemenscheibe (12) und/oder einer Außenumfangsfläche der Nabe (14) anliegen.

7. Vorrichtung (10) nach einem der vorhergehenden Ansprüche, **dadurch gekennzeichnet, dass** die Federvorrichtung (16) wenigstens ein Dämpfungselement (40) aufweist, wobei das Dämpfungselement (40) zwischen einem Federelement (28) und der Riemenscheibe (12) oder der Nabe (14) angeordnet ist.

8. Vorrichtung (10) nach Anspruch 7, **dadurch gekennzeichnet, dass** das Dämpfungselement (40) formschlüssig, kraftschlüssig und/oder stoffschlüssig mit der Riemenscheibe (12) und/oder der Nabe (14) verbunden ist.

9. Vorrichtung (10) nach Anspruch 7 oder 8, **dadurch gekennzeichnet, dass** das Dämpfungselement über wenigstens ein Stiftelement (56) mit der Riemenscheibe (12) und/oder der Nabe (14) verbunden ist.

10. Vorrichtung (10) nach einem der vorhergehenden Ansprüche, **dadurch gekennzeichnet, dass** ein Torsionsschwingungsdämpfer (18) vorgesehen ist, der mit der Nabe (14) verbunden ist.

11. Vorrichtung (10) nach einem der vorhergehenden Ansprüche, **dadurch gekennzeichnet, dass** eine Schmiereinrichtung vorgesehen ist.

12. Vorrichtung (10) nach einem der vorhergehend en Ansprüche, **dadurch gekennzeichnet, dass** wenigstens ein Verschlusselement (48, 50) zum Abdecken der Federvorrichtung (16) vorgesehen ist.
